# EUROPEAN PATENT APPLICATION

(11) **EP 4 184 606 A1**
(43) Date of publication of application: **24.05.2023**
(21) Application number: 21846759.5
(22) Date of filing: 24.05.2021
(51) Int. Cl.: H01M 4/13, H01M 4/62

(54) **POSITIVE ELECTRODE FOR BATTERIES, AND BATTERY**

(30) Priority: 20.07.2020 JP 2020123532
(71) Applicant: Panasonic Intellectual Property Management Co., Ltd., Osaka-shi, Osaka 540-6207 (JP)
(72) Inventor: MAEDA, Satoru, Osaka-shi, Osaka 540-6207 (JP); TAKAYAMA, Yosuke, Osaka-shi, Osaka 540-6207 (JP); KUROMIYA, Takao, Osaka-shi, Osaka 540-6207 (JP)
(74) Representative: Novagraaf International SA
(86) International application number: PCT/JP2021/019500
(87) International publication number: WO 2022/018954

(57) **Abstract**

This positive electrode for batteries comprises a positive electrode mixture that contains at least a positive electrode active material, a conductive agent and a fibrous binder; and the ratio of the BET specific surface area (Sₚₒ) of the positive electrode mixture to the BET specific surface area (Sᵢₙ) of inorganic particles containing the positive electrode active material and the conductive agent, namely Sₚₒ/Sᵢₙ is from 1.0 to 2.0.

## Description

### TECHNICAL FIELD

The present disclosure relates to a positive electrode for a battery, and a battery comprising the positive electrode for a battery.

### BACKGROUND ART

An electrode of a lithium-ion battery and the like is commonly produced by a wet process including applying an electrode mixture slurry including an active material, a binder, and the like on a surface of a core of a metal foil, and drying and compressing the resultant coating. In this case, the binder migrates from the core side to the surface side during the drying of the coating. This migration increases an amount of the binder in the proximity of the surface compared with the proximity of the core, and distribution of the binder is likely to be ununiform in the thickness direction of the formed mixture layer.

In recent years, proposed is a method of producing an electrode is proposed including compressing an electrode mixture to form a sheet, and then laminating the electrode mixture onto a core. Patent Literature 1 discloses an electrode film (electrode mixture) using a fibrous binder such as fibrillated polytetrafluoroethylene (PTFE).

### CITATION LIST

### PATENT LITERATURE

PATENT LITERATURE 1: Japanese Translation of PCT International Application Publication No. 2019-512872

### SUMMARY

According to the method disclosed in Patent Literature 1, a step of drying the mixture layer can be eliminated, and the problem of the above wet process is expected to be solved. However, investigation by the present inventors have found that the method of Patent Literature 1 has difficulty in densifying the positive electrode mixture in some cases depending on conditions of the fibrillation and the amount of the binder. The densification of the electrode mixture is not investigated in the method of Patent Literature 1, and the method still has room for improvement.

A positive electrode for a battery according to the present disclosure comprises a positive electrode mixture including at least a positive electrode active material, a conductive agent, and a fibrous binder, wherein a ratio (Sₚₒ/Sᵢₙ) of a BET specific surface area of the positive electrode mixture (Sₚₒ) to a BET specific surface area of inorganic particles including the positive electrode active material and the conductive agent (Sᵢₙ) is 1.0 to 2.0.

A battery according to the present disclosure comprises: the above positive electrode for a battery; a negative electrode; and an electrolyte liquid.

According to an aspect of the present disclosure, the positive electrode for a battery including the densified positive electrode mixture may be provided. The battery comprising the electrode according to the present disclosure has, for example, a high battery capacity.

### BRIEF DESCRIPTION OF DRAWINGS

FIG. 1 is a sectional view of a battery of an example of an embodiment.
FIG. 2 is a sectional view of a positive electrode of an example of an embodiment.
FIG. 3 is a view illustrating steps of producing a positive electrode mixture by a dry process in a method of manufacturing a positive electrode of an example of an embodiment.
FIG. 4 is a view illustrating a step of bonding a positive electrode mixture and a positive electrode core in a method of manufacturing a positive electrode of an example of an embodiment.

### DESCRIPTION OF EMBODIMENTS

Hereinafter, embodiments of an electrode for a battery according to the present disclosure will be described in detail. The embodiments described below are just examples, and the present disclosure is not limited to the following embodiments. The drawings referenced in the description of embodiments are schematically illustrated, and size ratio and the like of constituents illustrated in the drawings should be judged with considering the following description.

The electrode for a battery according to the present disclosure is suitable for an electrode of a non-aqueous electrolyte secondary battery such as a lithium-ion battery; however, it is also usable for a battery including an aqueous electrolyte liquid. The battery is not limited to a secondary battery, and the electrode is also usable for a primary battery. Hereinafter, descriptions will be made with a non-aqueous electrolyte secondary battery and an electrode (specifically, a positive electrode) for non-aqueous electrolyte secondary battery as examples.

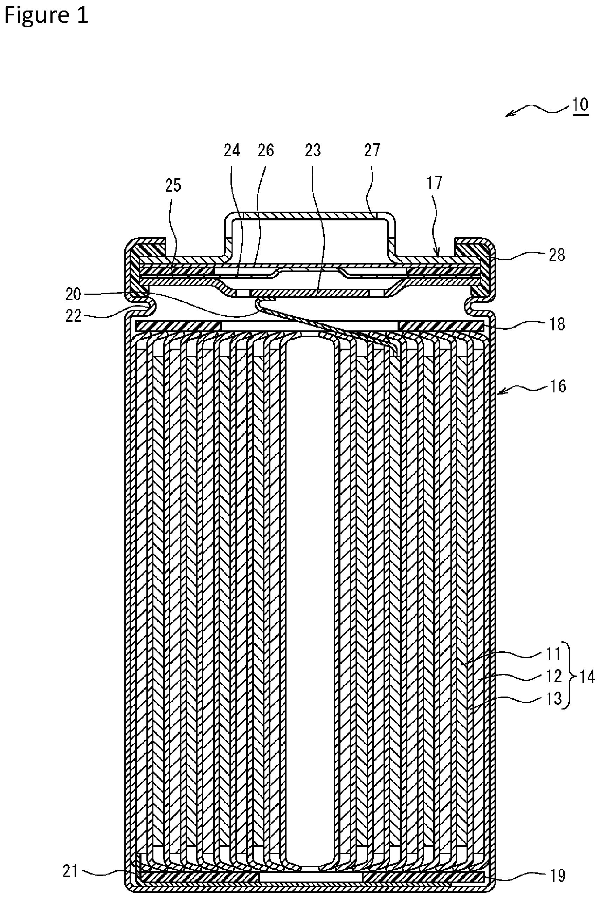

FIG. 1 is a sectional view of a non-aqueous electrolyte secondary battery 10 of an example of an embodiment. As illustrated in FIG. 1, the non-aqueous electrolyte secondary battery 10 comprises a wound electrode assembly 14, a non-aqueous electrolyte liquid, and an exterior housing can 16 housing the electrode assembly 14 and an electrolyte. The electrode assembly 14 has a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metallic container having an opening on one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The exterior of the battery is not limited to a cylindrical exterior housing can, and may be, for example, a rectangular exterior housing can, and may be an exterior constituted with laminated sheets including a metal layer and a resin layer. The electrode assembly may be a stacked electrode assembly in which a plurality of positive electrodes and a plurality of negative electrodes are alternately stacked with separators interposed therebetween.

The non-aqueous electrolyte liquid includes a non-aqueous solvent and an electrolyte salt dissolved in the non-aqueous solvent. For the non-aqueous solvent, esters, ethers, nitriles, amides, and a mixed solvent of two or more thereof are used, for example. The non-aqueous solvent may contain a halogen-substituted derivative in which hydrogen of these solvents is at least partially substituted with a halogen atom such as fluorine. For the electrolyte salt, a lithium salt such as LiPF₆ is used, for example.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two separators 13 are formed to be one size larger than at least the positive electrode 11, and disposed to, for example, sandwich the positive electrode 11. The electrode assembly 14 has a positive electrode lead 20 connected to the positive electrode 11 by welding or the like and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole of the insulating plate 18 toward the sealing assembly 17 side, and the negative electrode lead 21 extends through an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a groove 22 in which a part of a side wall thereof projects inward to support the sealing assembly 17 is formed. The groove 22 is preferably formed in a circular shape along a circumferential direction of the exterior housing can 16, and supports the sealing assembly 17 with the upper face thereof. The sealing assembly 17 is fixed on the upper part of the exterior housing can 16 with the groove 22 and with an end part of the opening of the exterior housing can 16 calked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected each other. The lower vent member 24 and the upper vent member 26 are connected at each of central parts thereof, and the insulating member 25 is interposed between each of the circumferential parts. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through the cap 27 opening.

Hereinafter, the positive electrode 11, the negative electrode 12, and the separator 13, which constitute the electrode assembly 14, particularly the positive electrode 11, will be described in detail.

### [Positive Electrode]

The positive electrode 11 comprises a positive electrode mixture including at least a positive electrode active material, a conductive agent, and a fibrous binder. A thickness of the positive electrode mixture may be, for example, 30 µm to 300 µm, preferably 30 µm to 120 µm, and more preferably 50 µm to 100 µm.

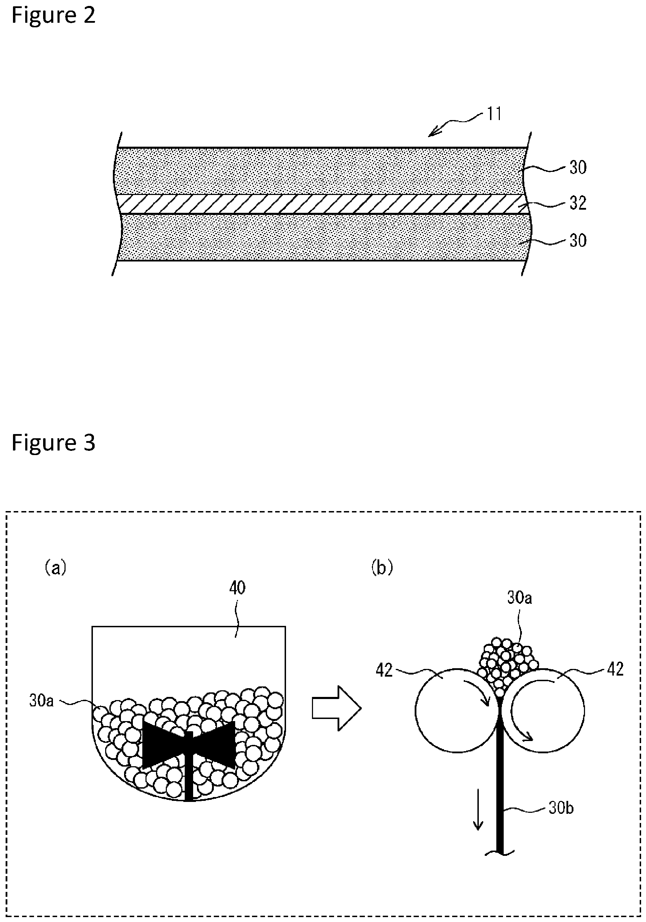

FIG. 2 is a sectional view of the positive electrode of an example of an embodiment. As illustrated in FIG. 2, the positive electrode 11 may further comprise a positive electrode core 32 bonded to a positive electrode mixture 30. The positive electrode core 32 may be bonded to the positive electrode mixture 30 with only one surface, and as illustrated in FIG. 2, may be bonded to the positive electrode mixture 30 with both surfaces. For the positive electrode core 32, a foil of a metal stable within a potential range of the positive electrode 11, such as aluminum and an aluminum alloy, a film in which such a metal is disposed on a surface layer thereof, and the like may be used.

The positive electrode mixture 30 is composed of the positive electrode active material as a main component (a component at the highest mass rate). A content of the positive electrode active material in the positive electrode mixture 30 may be, for example, 85 mass% to 99 mass%, and is preferably 90 mass% to 99 mass%. A median diameter (D50) on a volumetric basis of the positive electrode active material may be, for example, 1 µm to 30 µm, and is preferably 2 µm to 15 µm. Here, the median diameter (D50) on a volumetric basis, also referred to as a 50% particle diameter or a median diameter, means a particle diameter at which a volumetric integrated value is 50% in a particle size distribution measured by a laser diffraction scattering method. The D50 of the positive electrode active material can be measured by using water as a dispersion medium and LA-920, manufactured by HORIBA, Ltd., or the like.

Examples of the positive electrode active material include a lithium-transition metal composite oxide. Examples of a metal element contained in the lithium-transition metal composite oxide include Ni, Co, Mn, Al, B, Mg, Ti, V, Cr, Fe, Cu, Zn, Ga, Sr, Zr, Nb, In, Sn, Ta, and W. At least one of Ni, Co, and Mn is preferably contained. A preferable example of the composite oxide is a lithium-transition metal composite oxide containing Ni, Co, and Mn, or a lithium-transition metal composite oxide containing Ni, Co, and Al.

A filling density of the positive electrode active material in the positive electrode mixture 30 may be, for example, 3.0 g/cm³ or more, preferably 3.1 g/cm³ or more, and more preferably 3.2 g/cm³ or more. An upper limit of the filling density of the positive electrode active material may be, for example, 4.3 g/cm³. The filling density of the positive electrode active material can be calculated from a basis weight and a thickness of the positive electrode mixture 30. The thickness of the positive electrode mixture 30 can be calculated by, for example, measuring a thickness and weight of the entire positive electrode 11, then removing the positive electrode mixture 30 with a solvent to measure a thickness of the positive electrode core 32. The filling density of the positive electrode active material can be regulated with a linear pressure applied during the production of the positive electrode mixture 30. If the linear pressure is too high, the positive electrode active material cracks or the positive electrode current collector is damaged, and the positive electrode is more likely to be adversely affected. The positive electrode mixture 30 according to the present disclosure can be densified with a lower linear pressure.

Examples of the conductive agent included in the positive electrode mixture 30 include carbon materials such as carbon black (CB), acetylene black (AB), Ketjenblack, graphite, and carbon nanotube (CNC). A content of the conductive agent in the positive electrode mixture 30 may be, for example, 0.01 mass% to 8 mass%, preferably 0.1 mass% to 5 mass%, and more preferably 0.5 mass% to 5 mass%. A D50 of the conductive agent may be, for example, 0.05 µm to 1 µm. The D50 of the conductive agent can be measured by using water as a dispersion medium and LA-920, manufactured by HORIBA, Ltd., or the like, similar to that of the positive electrode active material. The conductive agent may be used alone, or may be complexed with the positive electrode active material and the like in advance.

The fibrous binder adheres onto the particle surface of the positive electrode active material, and intertwines with the positive electrode active material. In other words, the positive electrode active material is held by the fibrous binder present as a mesh. The conductive agent is preferably not incorporated in the fibrous binder, but preferably adheres onto the particle surface of the positive electrode active material.

The fibrous binder included in the positive electrode mixture 30 is obtained by, for example, fibrillating a particle binder. A material of the fibrous binder is not particularly limited as long as it can be fibrillated, and polytetrafluoroethylene (PTFE) is preferable because of easy fibrillation and good adhesiveness with the positive electrode active material. The fibrous binder may be substantially composed of only PTFE, and may contain another component within a degree not impairing the object of the present disclosure.

A content of the fibrous binder in the positive electrode mixture 30 may be, for example, 10 mass% or less, and is preferably 5 mass% or less. This can allow the mesh structure of the fibrous binder to maintain the positive electrode active material with appropriate flowable state. Thus, the positive electrode mixture 30 can be densified with a relatively low linear pressure. A lower limit of the content of the fibrous binder in the positive electrode mixture 30 may be, for example, 0.5 mass%. Within this range, the fibrous binder forms the mesh structure, and can hold the positive electrode active material.

The content of the fibrous binder is preferably substantially uniform in the thickness direction of the positive electrode mixture 30. This improves a bonding force of the positive electrode mixture 30 against the positive electrode core 32. The content of the fibrous binder being substantially uniform in the thickness direction of the positive electrode mixture 30 means small unevenness of the content of the fibrous binder between, for example, the proximity of the front surface and the proximity of the back surface of the positive electrode mixture 30. Specifically, a difference between the content of the fibrous binder in the proximity of the front surface and the content of the fibrous binder in the proximity of the back surface may be, for example, 0.3% or less. In order to determine the content of the fibrous binder in the proximity of the front surface and the content of the fibrous binder in the proximity of the back surface, a cross section of the positive electrode mixture 30 may be bisected in the thickness direction to specify a layer close to the positive electrode core 32 as the proximity of the back surface and to specify a layer far from the positive electrode core 32 as the proximity of the front surface. Furthermore, when a cross section of the positive electrode mixture 30 is trisected in the thickness direction to divide the cross section into three layers of a lower layer, a medium layer, and an upper layer from a side close to the positive electrode core 32, an unevenness of the contents of the fibrous binder between each layer is preferably low. Specifically, a difference between the content of the fibrous binder in each layer and an average value of the contents of the fibrous binder in the three layers may be, for example, 0.3% or less. The content of the fibrous binder in each layer can be measured by, for example, analyzing a cross section of the positive electrode mixture 30 exposed by using an ion-milling apparatus (for example, IM4000PLUS, manufactured by Hitachi High-Tech Corporation) with an electron probe micro analyzer (EPMA). If the positive electrode 11 is produced by a conventionally common wet process, the fibrous binder migrates during the drying of the coating to increase the amount of the fibrous binder in the proximity of the front surface compared with the proximity of the positive electrode core 32 in the positive electrode mixture 30 in some cases.

In both of the layers when the positive electrode mixture 30 is bisected in the thickness direction, the contents of the fibrous binder are preferably 10 mass% or less. This improves the bonding force of the positive electrode mixture 30 against the positive electrode core 32, and also improves permeability of the electrolyte liquid into the positive electrode mixture 30.

The positive electrode mixture 30 may further include 1 mass% or less of a soluble binder. Within this range, the binding between the positive electrode active materials is improved, and increase in the resistance of the positive electrode mixture 30 may be inhibited. Although the soluble binder adheres onto the surface of the positive electrode active material to improve the binding between the positive electrode active materials, the soluble binder with a content of more than 1 mass% covers the surface of the positive electrode active material to increase the resistance of the positive electrode mixture 30 in some cases. Examples of the soluble binder include polyvinylidene fluoride (PVdF).

In the positive electrode mixture 30, a ratio (Sₚₒ/Sᵢₙ) of a BET specific surface area of the positive electrode mixture (Sₚₒ) to a BET specific surface area of inorganic particles including the positive electrode active material and the conductive agent (Sᵢₙ) is 1.0 to 2.0. This may allow the mesh structure of the fibrous binder to maintain the positive electrode active material with an appropriate flowable state. Thus, the positive electrode mixture 30 may be densified with a relatively low linear pressure. Here, the BET specific surface area can be measured with a commercially available measurement device, such as HM model-1201, manufactured by Macsorb, for example.

The BET specific surface area of the positive electrode mixture 30 (Sₚₒ) is determined by measuring the positive electrode mixture 30 removed from the positive electrode 11 with the above measurement device. The BET specific surface area of the inorganic particles including the positive electrode active material and the conductive agent (Sᵢₙ) may be determined by the following method.
(1) The positive electrode mixture 30 removed from the positive electrode 11 is immersed in N-methyl-2-pyrrolidone (NMP) and stirred to dissolve the binder in NMP and to disperse the above inorganic particles in NMP.
(2) From the solution in which the inorganic particles are dispersed, the inorganic particles are recovered by a centrifugal separation method, and then dried.
(3) The dried inorganic particles are measured with the above measurement device, and the BET specific surface area of the inorganic particles including the positive electrode active material and the conductive agent (Sᵢₙ) are determined.

The BET specific surface area of the positive electrode mixture 30 (Sₚₒ) may be, for example, 4.5 m²/g or less, and is preferably 1.0 m²/g to 3.0 m²/g. When Sₚₒ is within this range, the ratio of Sₚₒ/Sᵢₙ is easily regulated within 1.0 to 2.0.

In both of the layers when the positive electrode mixture 30 is bisected in the thickness direction, Sₚₒ is preferably 4.5 m²/g or less, and more preferably 1.0 m²/g to 3.0 m²/g. In this case, the ratio of Sₚₒ/Sᵢₙ is easily regulated within 1.0 to 2.0. Sₚₒ in each layer of the bisected positive electrode mixture 30 can be determined by bisecting the cross section of the positive electrode mixture 30 in the thickness direction and measuring Sₚₒ of each layer.

A void ratio of the positive electrode mixture 30 may be 35% or less. This can densify the positive electrode mixture 30, and accordingly the positive electrode 11 can have a higher capacity. Voids formed in the positive electrode mixture 30 may be communicated with the surface of the positive electrode mixture 30. Such voids serve as a pathway for the electrolyte liquid, and improve permeability of the electrolyte liquid into the positive electrode mixture 30. The void ratio of the positive electrode mixture 30 is preferably 5% or more, and more preferably 10% or more from the viewpoints of the improvement in permeability of the electrolyte liquid and the like.

The void ratio of the positive electrode mixture 30 can be measured by the following method.
(1) A cross section of the positive electrode mixture 30 is exposed by using an ion-milling apparatus.
(2) A backscattered electron image of the exposed cross section of the positive electrode mixture 30 is photographed by using a scanning electron microscope (TEM). The magnification with photographing the backscattered electron image is, for example, 1000 to 5000.
(3) The SEM image of the cross section of the positive electrode mixture 30 is imported into a computer, and color-coded into three colors by using an image analysis software (for example, ImageJ, available from National Institutes of Health). The medium color is specified as the void.
(4) A measurement target region is selected from the processed image, a total area of the void in this region is determined, and a rate of the void in the measurement target region (void ratio) is calculated.

A method of producing the positive electrode mixture 30 is not particularly limited, and the positive electrode mixture 30 can be produced by, for example, a dry process, a wet-drying process, and the like described below. As long as the migration of the binder may be inhibited, the positive electrode mixture 30 may by produced by using a common wet process.

### <Dry Process>

As illustrated in FIG. 3(a), in the dry process, binder particles are fed into a mixer 40, and can be fibrillated by applying a shearing force. In the present embodiment, the positive electrode active material, the binder particles, and the conductive agent are fed into the mixer 40, and with fibrillating the binder particles, these materials are mixed to produce positive electrode mixture particles 30a (hereinafter, this step is referred to as "the first step"). Then, as illustrated in FIG. 3(b), the positive electrode mixture particles 30a are rolled for forming a sheet to produce a positive electrode mixture sheet 30b (hereinafter, this step is referred to as "the second step"). By the dry process, the positive electrode mixture 30 can be produced from materials having a solid-content concentration of substantially 100%.

The binder particles used in the first step are preferably particles of polytetrafluoroethylene (PTFE). PVdF and the like, which are not fibrillated, may be added along with the PTFE. As the mixer 40, conventionally known mechanically stirring mixers may be used, for example. Specific examples of a preferable mixer 40 include a cutter mill, a pin mill, a bead mill, a fine-particle composer (an apparatus generating a shearing force between: a rotor having a special shape and rotating at a high speed in a tank; and a collision plate), a granulator, and a kneader such as a twin-screw extrusion kneader and a planetary mixer. These mixers can apply a mechanical shearing force. A cutter mill, a fine-particle composer, a granulator, and a twin-screw extrusion kneader are preferable.

In the second step, the positive electrode mixture particles 30a may be rolled by using two rollers 42 to be formed into a sheet. The two rollers 42 are disposed with a predetermined gap, and rotate in the same direction. The positive electrode mixture particles 30a are supplied into the gap between the two rollers 42, and compressed by the two rollers 42 to be stretched into the sheet shape. The obtained positive electrode mixture sheet 30b may be passed through the gap between the two rollers 42 a plurality of times, and may be stretched one or more times by using another roller with different roller diameter, peripheral speed, gap, and the like. The positive electrode mixture sheet 30b may be heat-pressed by heating the roller.

A thickness of the positive electrode mixture sheet 30b can be regulated by, for example, the gap and peripheral speed of the two rollers 42, and the number of times of the stretching treatment. In the second step, the positive electrode mixture particles 30a are preferably formed into the sheet by using the two rollers 42 with a peripheral speed ratio with difference of 2 or more. Making difference in the peripheral speed ratio of the two rollers 42 facilitates, for example, formation of a thin film of the positive electrode mixture sheet 30b to improve the productivity. The peripheral speed ratio of the two rollers 42 is preferably 2.5 or more, and may be 3 or more.

### <Wet-Drying Process>

Also, in the wet-drying process, the binder particles may be fed into a kneader for applying a shearing force to perform fibrillation, similar to the above dry process. In the wet-drying process, in the above first step, the positive electrode active material, the binder, the conductive agent, and a solvent are fed into a kneader, such as a twin-screw extrusion kneader and a planetary mixer, and these materials may be solid-kneaded with applying a mechanical shearing force and dried to produce the positive electrode mixture particles. As the solvent, NMP may be used, for example. A total amount of the positive electrode active material, the binder, and the conductive agent is preferably, for example, 70 mass% to 90 mass% based on a total amount including the solvent. If the total amount is 70 mass% or less, the fibrillation is difficult to perform. If the total amount is 90 mass% or more, the materials are difficult to mix uniformly. The solvent may be added in a plurality of separate batches. If the solid-kneading is continuously performed in a long time until Sₚₒ/Sᵢₙ exceeds 2.0, the mesh structure of the fibrous binder becomes too strong, and the flowability of the positive electrode active material is decreased to cause difficulty in densifying the positive electrode mixture 30 in some cases. For example, solid-kneading the positive electrode active material and the conductive agent and then adding the binder can inhibit excessive strengthening of mesh structure of the fibrous binder, and the value of Sₚₒ/Sᵢₙ can be regulated to 2.0 or less. Also, in the wet-drying process, the positive electrode mixture 30 can be produced in the second step similar to that of the dry process.

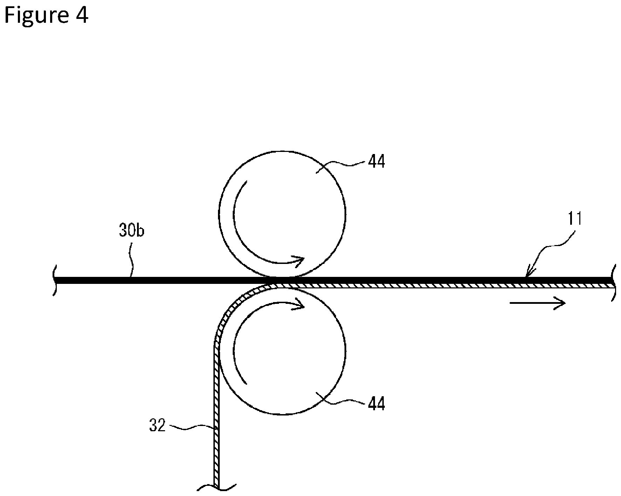

Then, as illustrated in FIG. 4, the positive electrode mixture sheet 30b produced by the dry process or the wet-drying process may be laminated onto the positive electrode core 32 to give the positive electrode 11 in which the positive electrode mixture 30 composed of the positive electrode mixture sheet 30b is provided on the surface of the positive electrode core 32 (hereinafter, this step is referred to as "the third step"). Although FIG. 4 illustrates a state where the positive electrode mixture sheet 30b is bonded onto only one surface of the positive electrode core 32, the positive electrode mixture sheet 30b may be bonded onto both the surfaces of the positive electrode core 32. The two positive electrode mixture sheets 30b may be bonded onto both the surfaces of the positive electrode core 32 at the same time. Alternatively, one positive electrode mixture sheet 30b may be bonded onto one surface of the positive electrode core 32, and then the other positive electrode mixture sheet 30b may be bonded onto the other surface.

In the third step, the positive electrode mixture sheet 30b is disposed on the surface of the positive electrode core 32, and a stacked product of the positive electrode core 32 and the positive electrode mixture sheet 30b is pressed by using two rollers 44 to laminate the positive electrode mixture sheet 30b onto the surface of the positive electrode core 32. The two rollers 44 are disposed with, for example, a predetermined gap, and may rotate in the same direction at the same peripheral speed. At least one of the two rollers 44 may be heated by a heater to a predetermined temperature. A pressing linear pressure may be, for example, 0.2 t/cm to 5.0 t/cm, and is preferably 0.5 t/cm to 3 t/cm.

### [Negative Electrode]

The negative electrode 12 comprises a negative electrode core composed of a metal foil or the like and a negative electrode mixture provided on a surface of the negative electrode core. For the negative electrode core, a foil of a metal stable within a potential range of the negative electrode 12, a film in which such a metal is disposed on a surface layer thereof, and the like may be used, and a copper foil is typically used. The negative electrode mixture may include at least a negative electrode active material and a binder. The negative electrode 12 may be produced by providing a negative electrode mixture layer on the surface of the negative electrode core by a common wet process, and may be produced by bonding a negative electrode mixture sheet formed by a dry process or a wet-drying process onto the negative electrode core, similar to that in the positive electrode mixture 30.

For the negative electrode active material, a carbon-based active material such as a natural graphite such as flake graphite, massive graphite, and amorphous graphite, and an artificial graphite such as massive artificial graphite (MAG) and graphitized mesophase-carbon microbead (MCMB) are used, for example. For the negative electrode active material, a Si-based active material to form an alloy with lithium, or the like may be used. The negative electrode mixture may further include a conductive agent.

### [Separator]

For the separator 13, a porous sheet having an ion permeation property and an insulation property is used. Specific examples of the porous sheet include a fine porous thin film, a woven fabric, and a nonwoven fabric. As a material for the separator 13, a polyolefin such as polyethylene and polypropylene, cellulose, and the like are preferable. The separator 13 may have any of a single-layered structure and a stacked structure. On a surface of the separator 13, a heat-resistant layer and the like may be formed.

### EXAMPLES

Hereinafter, the present disclosure will be further described with Examples, but the present disclosure is not limited to these Examples.

### <Example 1>

### [Production of Positive Electrode Mixture Particles]

In Example 1, positive electrode mixture particles were produced by using a wet-drying process. As a positive electrode active material, lithium nickel cobalt manganate (NMC) having a BET specific surface area of 0.26 m²/g was used. As a conductive agent, an acetylene black (AB) paste was used. Mixing 100 parts by mass of the positive electrode active material and 1.5 parts by mass of the AB, at a solid-content conversion, was performed. Into this mixture, 83.8%, at a mass ratio based on the mixture, of N-methyl-2-pyrrolidone (NMP) was further added, and the mixture was mixed for 30 minutes by using a planetary mixer. Then, 1 part by mass of PTFE particles (D210C, manufactured by DAIKIN INDUSTRIES, LTD.) and the same amount as above of NMP were further added, the mixture was mixed for 5 minutes by using the planetary mixer, and then dried at 120°C for 10 hours to remove the solvent. This mixing treatment fibrillated the PTFE particles to obtain positive electrode mixture particles in which the positive electrode active material, the fibrous PTFE, and AB were uniformly dispersed.

### [Production of Positive Electrode Mixture Sheet]

The obtained positive electrode mixture particles were passed between two rollers for rolling to produce a positive electrode mixture sheet. The elongation treatment was performed between the two rollers to thin the sheet until a basis weight became 300 g/m².

### [Production of Positive Electrode]

The obtained positive electrode mixture sheet was disposed on a surface of a positive electrode core, and a stacked product of the positive electrode mixture sheet and the positive electrode core was pressed (linear pressure: 1.0 t/cm) by using two rollers to obtain a positive electrode. As the core, an aluminum alloy foil was used. Of the produced positive electrode, Sₚₒ of each layer when the positive electrode mixture was bisected was measured. Sₚₒ of the proximity of the surface was 2.06 m²/g, and Sₚₒ of the proximity of the core was 2.07 m²/g.

### <Example 2>

A positive electrode was produced in the same manner as in Example 1 except that the pressing linear pressure was changed to 2.0 t/cm in the production of the positive electrode. Of the produced positive electrode, Sₚₒ of each layer when the positive electrode mixture was bisected was measured. Sₚₒ of the proximity of the surface was 2.38 m²/g, and Sₚₒ of the proximity of the core was 2.36 m²/g.

### <Example 3>

### [Production of Positive Electrode Mixture Particles]

In Example 3, positive electrode mixture particles were produced by using a dry process. As a positive electrode active material, lithium nickel cobalt manganate (NMC) having a BET specific surface area of 0.26 m²/g was used. As a conductive agent, AB particles were used. The positive electrode active material, PTFE particles (F106, manufactured by DAIKIN INDUSTRIES, LTD.), and the AB were mixed at a mass ratio of 100:4:1.5 by using a mixer (Wonder crusher, manufactured by OSAKA CHEMICAL Co., Ltd.). This mixing treatment fibrillated the PTFE particles to obtain positive electrode mixture in which the active material, the fibrous PTFE, and the acetylene black were uniformly dispersed. The obtained positive electrode mixture had a solid-content concentration of 100%.

A positive electrode mixture sheet was produced by using the obtained positive electrode mixture particles to produce a positive electrode in the same manner as in Example 1.

### <Example 4>

A positive electrode was produced in the same manner as in Example 3 except that: in the production of the positive electrode mixture particles, lithium nickel cobalt aluminate (NCA) having a BET specific surface area of 1.09 m²/g was used as the positive electrode active material, F107, manufactured by DAIKIN INDUSTRIES, LTD., was used as the PTFE particles, and the positive electrode active material, the PTFE particles, and AB were mixed at a mass ratio of 100:1:0.9; and in the production of the positive electrode, the pressing linear pressure was changed to 2.0 t/cm.

### <Comparative Example 1>

### [Production of Positive Electrode]

In Comparative Example 1, a positive electrode mixture layer was produced by using a wet process. As a positive electrode active material, lithium nickel cobalt manganate (NMC) having a BET specific surface area of 0.26 m²/g was used. As a conductive agent, an AB paste was used. The positive electrode active material, polyvinylidene fluoride (PVdF), and the AB were mixed at a solid-content mass ratio of 100:1:1.5, an appropriate amount of NMP was added, and then the mixture was kneaded to prepare a positive electrode mixture slurry. The positive electrode mixture slurry was applied on both surfaces of a positive electrode core made of an aluminum alloy foil, the resultant coating was dried, and then the coating was pressed by using two rollers with a linear pressure of 1.0 t/cm to produce a positive electrode in which positive electrode mixture layers were formed on both the surfaces of the positive electrode core.

### <Comparative Example 2>

A positive electrode was produced in the same manner as in Comparative Example 1 except that the pressing linear pressure was changed to 2.0 t/cm.

### <Comparative Example 3>

### [Production of Positive Electrode Mixture Particles]

In Comparative Example 3, positive electrode mixture particles were produced by using a wet-drying process. As a positive electrode active material, lithium nickel cobalt manganate (NMC) having a BET specific surface area of 0.26 m²/g was used. As a conductive agent, an acetylene black (AB) paste was used. Mixing 100 parts by mass of the positive electrode active material, 1 part by mass of PTFE particles (D210C, manufactured by DAIKIN INDUSTRIES, LTD.), and 1.5 parts by mass of the AB, at a solid-content conversion, was performed. Into this mixture, 167.6%, at a volume ratio based on the mixture, of N-methyl-2-pyrrolidone (NMP) was further added, the mixture was mixed for 35 minutes by using a planetary mixer, and then dried at 120°C for 10 hours to remove the solvent. This mixing treatment fibrillated the PTFE particles to obtain positive electrode mixture particles in which the positive electrode active material, the fibrous PTFE, and AB were uniformly dispersed.

A positive electrode mixture sheet was produced by using the obtained positive electrode mixture particles to produce a positive electrode in the same manner as in Example 1 except that the pressing linear pressure was changed to 2.0 t/cm in the production of the positive electrode.

### <Comparative Example 4>

A positive electrode was produced in the same manner as in Comparative Example 3 except that: the mixing ratio of the PTFE particles was changed to 4 parts by mass in the production of the positive electrode mixture particles; and the pressing linear pressure was changed to 1.0 t/cm in the production of the positive electrode.

### <Comparative Example 5>

A positive electrode was produced in the same manner as in Example 3 except that the positive electrode active material, the PTFE particles, and AB were mixed at a mass ratio of 100:10:1.5 in the production of the positive electrode mixture particles.

### <Comparative Example 6>

A positive electrode was produced in the same manner as in Comparative Example 2 except that lithium nickel cobalt aluminate (NCA) having a BET specific surface area of 1.09 m²/g was used as the positive electrode active material.

Of the positive electrode mixtures of the positive electrodes in Examples and Comparative Examples, evaluated with the above methods were: a BET specific surface area of the inorganic particles including the positive electrode active material and the conductive agent (Sᵢₙ); a BET specific surface area of the positive electrode mixture (Sₚₒ); Sₚₒ/Sᵢₙ; a filling density and void ratio of the positive electrode active material; and contents of the binder in each layer of a lower layer, a medium layer, and an upper layer. Table 1 describes these evaluation results and the production conditions of the positive electrodes.

**[Table 1]**

| | Production conditions | | | Evaluation results | | | | | |
|---|---|---|---|---|---|---|---|---|---|
| | Process | Mixing ratio [parts by mass] | Linear pressure [t/cm] | Sₚₒ [m²/g] | Sin [m²/g] | Sₚₒ/Sᵢₙ | Filling density [g/cm³] | Void ratio [%] | Binder [%] upper layer / medium layer / lower layer |
| Example 1 | Wet-drying | NMC 100 PTFE 1 AB 1.5 | 1 | 2.05 | 1.72 | 1.19 | 3.10 | 30.4 | 1.0/1.0/1.0 |
| Example 2 | Wet-drying | NMC 100 PTFE 1 AB 1.5 | 2 | 2.36 | 2.04 | 1.16 | 3.29 | 28.6 | 1.0/1.0/1.0 |
| Example 3 | Dry | NMC 100 PTFE 4 AB 1.5 | 1 | 2.99 | 1.74 | 1.72 | 3.22 | 29.3 | 4.1/4.1/3.8 |
| Example 4 | Dry | NCA 100 PTFE 1 AB 0.9 | 2 | 2.47 | 2.25 | 1.10 | 3.66 | 30.9 | 1.0/1.0/1.0 |
| Comparative Example 1 | Wet | NMC 100 PVdF 1 AB 1.5 | 1 | 1.30 | 1.82 | 0.72 | 2.90 | 32.5 | 1.6/0.9/0.5 |
| Comparative Example 2 | Wet | NMC 100 PVdF 1 AB 1.5 | 2 | 1.38 | 1.91 | 0.72 | 3.00 | 31.4 | 1.6/0.9/0.6 |
| Comparative Example 3 | Wet-drying | NMC 100 PTFE 1 AB 1.5 | 2 | 1.61 | 2.07 | 0.78 | 2.86 | 32.9 | 1.0/1.0/1.0 |
| Comparative Example 4 | Wet-drying | NMC 100 PTFE 4 AB 1.5 | 1 | 1.55 | 1.68 | 0.92 | 2.78 | 33.9 | 4.2/3.9/3.9 |
| Comparative Example 5 | Dry | NMC 100 PTFE 10 AB 1.5 | 1 | 4.72 | 1.73 | 2.73 | 2.39 | 39.4 | 10.2/10.0/9.8 |
| Comparative Example 6 | Wet | NCA 100 PVdF 1 AB 0.9 | 2 | 1.92 | 2.23 | 0.86 | 3.45 | 32.8 | 1.3/1.1/0.6 |

From the evaluation results shown in Table 1, it is found that the positive electrodes of any of Examples 1 to 4, which have Sₚₒ/Sᵢₙ within a range of 1.0 to 2.0, comprise a densified positive electrode mixture compared with Comparative Examples, which use the same positive electrode active material to produce the positive electrode mixture. Since Comparative Examples 1, 2, and 6 used the conventional wet process, the binder had ununiform distribution and had a large difference in the content amount of the binder between the upper layer and the lower layer. Since Comparative Examples 3 and 4 continuously performed the solid-kneading for a long time, it was presumed that the mesh structure of PTFE became too strong until Sₚₒ/Sᵢₙ exceeds 2.0, and the flowability of the positive electrode active material was decreased to fail to sufficiently increase the filling density of the positive electrode mixture. In Comparative Example 5, it was presumed that the exceedingly large amount of PTFE added decreased the flowability of the positive electrode active material to fail to sufficiently increase the filling density of the positive electrode mixture.

### REFERENCE SIGNS LIST

10 Secondary battery
11 Positive electrode
12 Negative electrode
13 Separator
14 Electrode assembly
16 Exterior housing can
17 Sealing assembly
18, 19 Insulating plate
20 Positive electrode lead
21 Negative electrode lead
22 Groove
23 Internal terminal plate
24 Lower vent member
25 Insulating member
26 Upper vent member
27 Cap
28 Gasket
30 Positive electrode mixture
30a Positive electrode mixture particles
30b Positive electrode mixture sheet
32 Positive electrode core
40, 42, 44 Roller

## Claims

1. A positive electrode for a battery, comprising:
a positive electrode mixture including at least a positive electrode active material, a conductive agent, and a fibrous binder, wherein
a ratio (Sₚₒ/Sᵢₙ) of a BET specific surface area of the positive electrode mixture (Sₚₒ) to a BET specific surface area of inorganic particles including the positive electrode active material and the conductive agent (Sᵢₙ) is 1.0 to 2.0.

2. The positive electrode for a battery according to claim 1, wherein a void ratio of the positive electrode mixture is 35% or less.

3. The positive electrode for a battery according to claim 1 or 2, wherein, when the positive electrode mixture is bisected into two layers in a thickness direction, the Sₚₒ is 4.5 m²/g or less in both of the layers.

4. The positive electrode for a battery according to claim 3, wherein, when the positive electrode mixture is bisected into two layers in a thickness direction, the Sₚₒ is 1.0 m²/g to 3.0 m²/g in both of the layers.

5. The positive electrode for a battery according to any one of claims 1 to 4, wherein, when the positive electrode mixture is bisected into two layers in a thickness direction, a content of the fibrous binder is 10 mass% or less in both of the layers.

6. The positive electrode for a battery according to any one of claims 1 to 5, wherein the positive electrode mixture further includes 1 mass% or less of a soluble binder.

7. The positive electrode for a battery according to any one of claims 1 to 6, further comprising a positive electrode core bonded to the positive electrode mixture.

8. A battery, comprising:
the positive electrode for a battery according to any one of claims 1 to 7;
a negative electrode; and
an electrolyte liquid.
